# EUROPÄISCHE PATENTSCHRIFT

(11) **EP 1 289 806 B1**
(45) Veröffentlichungstag und Bekanntmachung des Hinweises auf die Patenterteilung: **20.07.2005**
(21) Anmeldenummer: 01940119.9
(22) Anmeldetag: 04.04.2001
(51) Int. Cl.: B60S 1/38

(54) **WISCHBLATT ZUM REINIGEN VON SCHEIBEN INSBESONDERE VON KRAFTFAHRZEUGEN**
WIPER BLADE FOR CLEANING SCREENS IN PARTICULAR ON MOTOR VEHICLES
RACLETTE D'ESSUIE-GLACE POUR LE NETTOYAGE DE VITRES, NOTAMMENT DE VEHICULES AUTOMOBILES

(30) Priorität: 29.05.2000 DE 10026419; 12.09.2000 DE 10044913
(43) Veröffentlichungstag der Anmeldung: 12.03.2003
(73) Patentinhaber: ROBERT BOSCH GMBH, 70442 Stuttgart (DE)
(72) Erfinder: DE BLOCK, Peter, B-3545 Halen (BE); WIJNANTS, Peter, B-3111 Wezemaal (BE)
(86) Internationale Anmeldenummer: PCT/DE2001/001304
(87) Internationale Veröffentlichungsnummer: WO 2001/092073

(56) Entgegenhaltungen:
- WO-A-00/34090
- WO-A-01/49537
- DE-A- 19 736 368
- GB-A- 2 346 318
- US-A- 2 814 820
- US-A- 3 881 214

## Beschreibung

### Stand der Technik

Bei Wischblättern der im Oberbegriff des Anspruchs 1 bezeichneten Art soll das Tragelement über.das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärische gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397).

Die Erfindung geht aus von einem Wischblatt nach dem Oberbegriff des Anspruchs 1. Bei einem bekannten Wischblatt dieser Art (DE 197 36 368) ist das Wischblatt mit einer sogenannten Windabweisleiste versehen, damit den bei hohen Fahrgeschwindigkeiten auftretenden, strömungsbedingten Abhebebestrebungen des Wischblatts von der Scheibe eine zur Scheibe gerichtete Kraftkomponente entgegengesetzt wird. Dazu hat die Windabweisleiste eine sich beim Pendelwischbetrieb ergebende, vom Fahrtwind hauptsächlich beaufschlagte Vorderseite, die als Anströmfläche ausgebildet ist. Der Querschnitt der Windabweisleiste hat etwa die Form eines rechtwinkligen Dreiecks, dessen eine Kathede dem Tragelement zugewandt ist und dessen Hypotenuse die Anströmfläche darstellt. Diese schließt mit der Pendel-Verschiebeebene des Wischblatts beziehungsweise mit der Oberfläche der Scheibe einen spitzen Winkel ein. Das benutzte Dreiecksprofil erfordert zur Herstellung der Windabweisleiste vergleichsweise sehr viel Material, was sich bei den Kosten für das Wischblatt niederschlägt. Darüber hinaus wird das Gewicht des Wischblatts unerwünscht erheblich vergrößert. Die beim Pendel-Wischbetrieb zu beschleunigende, vergrößerte Masse erfordert nämlich ein stärkeres Antriebsaggregat sowie eine aufwendigere Auslegung des diesem nachgeordneten Pendelgetriebes. Weiter kann durch die profilbedingte Biegesteifigkeit einer so geformten Windabweisleiste das Arbeitsverhalten des Tragelements beziehungsweise des Wischblatts beeinträchtigt werden.

### Vorteile der Erfindung

Bei dem erfindungsgemäßen Wischblatt mit dem kennzeichnenden Merkmalen des Anspruchs 1 wird das Gewicht der Windabweisleiste durch die Querschnittsgestalt eines Winkelprofils deutlich verringert. Darüber hinaus ergibt sich neben der Materialersparnis auch eine Verringerung der bewegten Masse mit den sich daraus ergebenden Vorteilen hinsichtlich der Auslegung des Antriebsaggregats und des Pendelgetriebes. Weiter wird die Biegesteifigkeit der Windabweisleiste verringert und damit deren Einfluss auf das Biege- und Federverhalten des Wischblatt-Tragelements deutlich reduziert.

Wenn an der oberen Bandfläche des Tragelements in dessen Mittelabschnitt das wischblattseitige Teil einer Vorrichtung zum Verbinden des Wischblatts mit einem pendelnd angetriebenen Wischerarm sitzt und an jedem der beiden Enden des Tragelements eine Abschluss-Endkappe angeordnet ist, ergibt sich eine einfache Montage der Windabweisleiste, wenn diese aus zwei Teilstücken besteht, von denen sich jeweils ein Teilstück zwischen den Endkappen und dem Vorrichtungsteil erstreckt.

In Fortbildung der Erfindung ist das Profil des Querschnitts über die gesamte Länge der Windabweisleiste gleich. Dadurch kann diese besonders kostengünstig im Extrusionsverfahren hergestellt werden.

In Weiterbildung der Erfindung sind die beiden Schenkel der Windabweisleiste im Bereich der beiden Wischblattenden durch eine Wand miteinander verbunden. Bei Verwendung einer solchen in einer Spritzform herzustellenden Windabweisleiste können die an den Enden des Tragelements beziehungsweise des Wischblatts anzuordnenden Endkappen entfallen, weil diese Wand den Abschluss der Windabweisleiste bildet. Weiter ist es bei einer so hergestellten Windabweisleiste möglich, diese mit beliebigen Ausformungen zu versehen. Sie lässt sich auch ohne Schwierigkeiten beliebigen Ausformungen des Tragelements anpassen beispielsweise wenn dieses in Längsrichtung gesehen von Mittelbereich aus zu den Enden hin eine Querschnittsverkleinerung hat.

Weiter ist es möglich den Auslauf des Querschnitts der Windabweisleiste zu deren Enden hin nach stilistischen Gesichtspunkten zu gestalten. So kann es einmal zweckmäßig sein, wenn die Wand im wesentlichen senkrecht zum Tragelement ausgerichtet ist.

Andererseits kann ein formschöner Abschluss der Windabweisleiste auch durch eine entsprechend schräge Anordnung der Wand erreicht werden, bei der eine Außenseite der Wand mit dem Tragelement einen spitzen Winkel α einschließt. Es versteht sich von selbst, dass jedes der beiden Enden von zwei zu einer Windabweisleiste gehörenden Teilstücken entsprechend den obigen Maßnahmen unterschiedlich ausgebildet sein können.

Bei bestimmten Anwendungsfällen kann es zur Vereinfachung der Montage des Wischblatts von Vorteil sein, wenn die Wand mit einer zur Scheibe hin randoffenen Aussparung versehen ist, deren Breite größer ist als die Tiefe der Wischleiste im Bereich des Tragelements und deren Tiefe bis zur oberen Bandfläche des Tragelements reicht.

Eine betriebssicher Abstützung der Windabweisleiste am Wischblatt wird durch eine feste Verbindung der Schenkelenden am Wischblatt erreicht.

Eine solche Verbindung mit dem Wischblatt kann einfach und preisgünstig durch eine Klebeverbindung erreicht werden.

Wenn die freien Schenkelenden der Windabweisleiste dazu mit dem Tragelement des Wischblatts verbunden vorzugsweise verklebt werden, wird eine präzise Positionierung der Windabweisleiste am Wischblatt gewährleistet.

Die Positionierung wird noch weiter verbessert, wenn in Ausgestaltung des Erfindungsgedankens die freien Schenkelenden der Windabweisleiste wenigstens abschnittsweise mit krallenartigen Fortsätzen versehen sind, welche die äußeren, voneinander abgewandten Randstreifen des Tragelements passend umgreifen.

Bei Benutzung von mit den erwähnten Abschlusswänden versehenen Windabweisleisten ist es sinnvoll, wenn sich die krallenartigen Fortsätze von den Schenkelenden aus in den Bereich der Wand erstrecken und stirnseitige Endbereiche des Tragelements passend umgreifen.

Die als Positionierungshilfe benutzen krallenartigen Fortsätze bieten besonders vorteilhafte Bereiche für die Klebeverbindung.

Für eine besonders stabile, betriebssichere Befestigung der Windabweisleiste am Tragelement hat die an der oberen Bandfläche des Tragelements anliegende Krallenfläche eine größere Breite als die an der unteren Bandseite angreifende Krallenfläche.

Zweckmäßig ist die Anströmfläche der Windabweisleiste an der Außenwand des einen Schenkels als Hohlkehle ausgebildet.

Zur Vermeidung eines ungünstigen Strömungsverlaufs des am Wischblatt vorbeistreichenden Fahrtwindes im Bereich der Wischblattenden sind die Endkappen mit einer Hohlkehle versehen, die sich in Verlängerung der Hohlkehle der Windabweisleiste erstreckt.

Um diesem Nachteil auch im Mittelabschnitt des Wischblatts zu begegnen, ist das wischblattseitige Teil der Verbindungsvorrichtung mit einer Hohlkehle versehen, die sich in Verlängerung der Hohlkehle der Windabweisleiste erstreckt.

Damit die Verteilung des Wischblatt-Anpressdrucks an der Scheibe durch das individuell ausgelegte Tragelement von der Windabweisleiste nicht wesentlich beeinflusst wird, liegt die Härte des Materials für die Windabweisleiste höchstens um 40 Prozent über der Härte des Materials für die Wischleiste.

Besonders günstig ist in diesem Zusammenhang, wenn die Härte des Materials für die Windabweisleiste höchstens um 20 Prozent über der Härte des Materials für die Wischleiste liegt.

In vielen Fällen hat es sich dabei als vorteilhaft erwiesen, wenn die Wischleiste eine Shore-Härte A zwischen 64 und 71 hat und die Windabweisleiste eine Shore-Härte A zwischen 70 und 78 aufweist.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

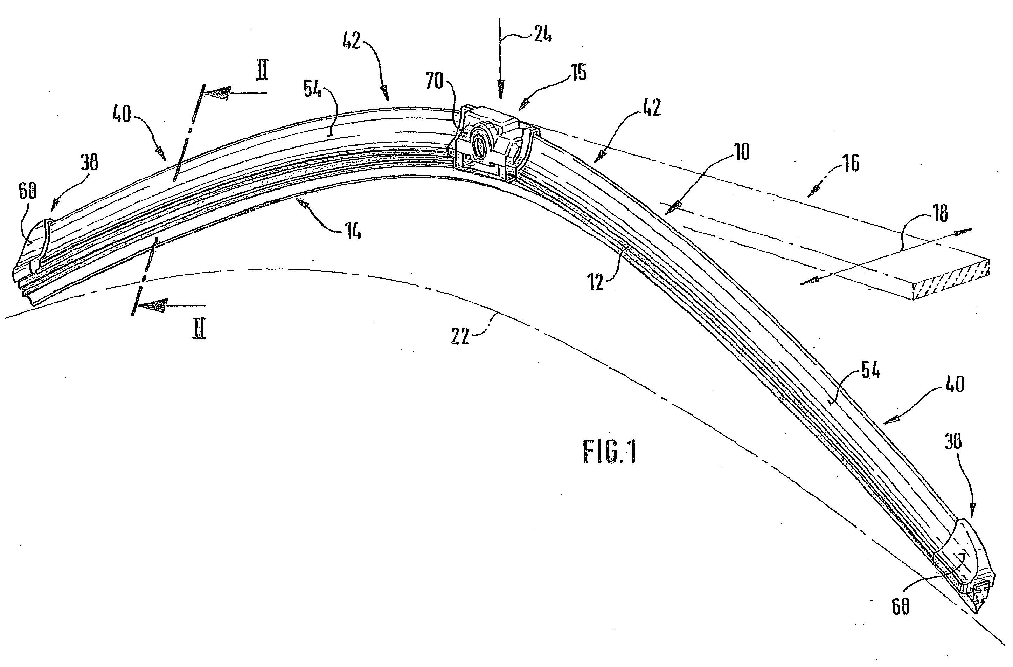

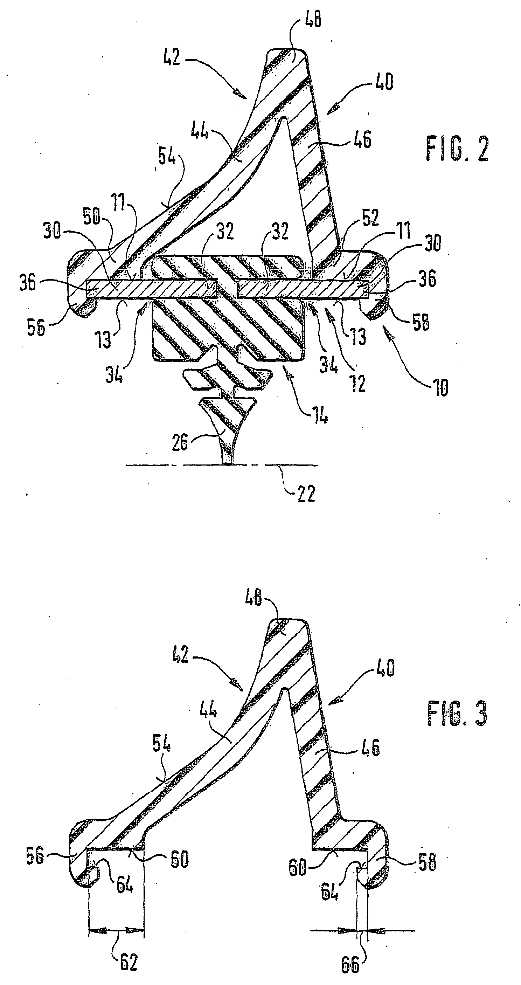

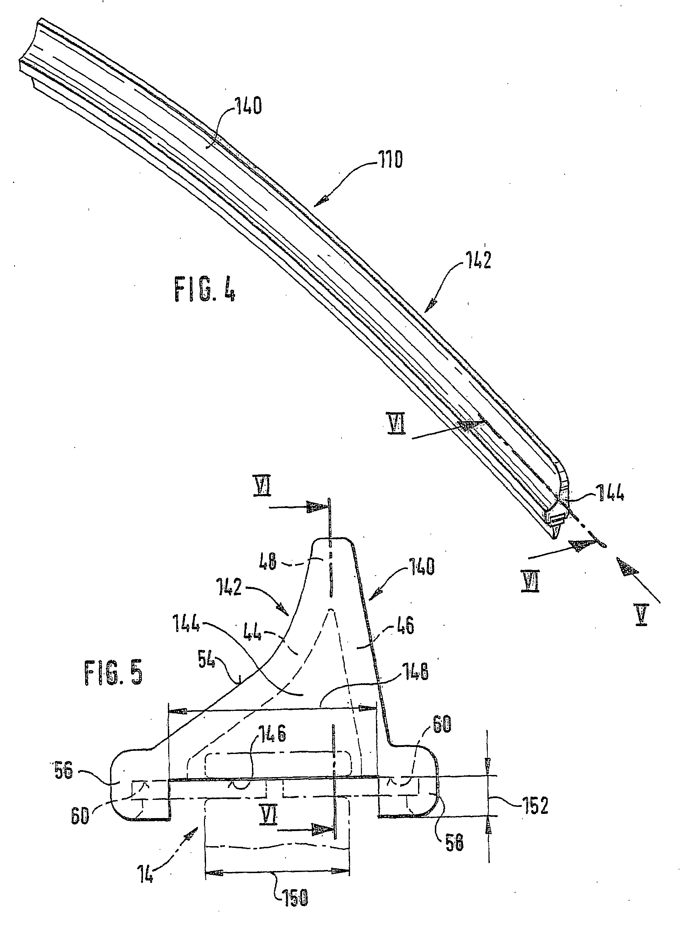

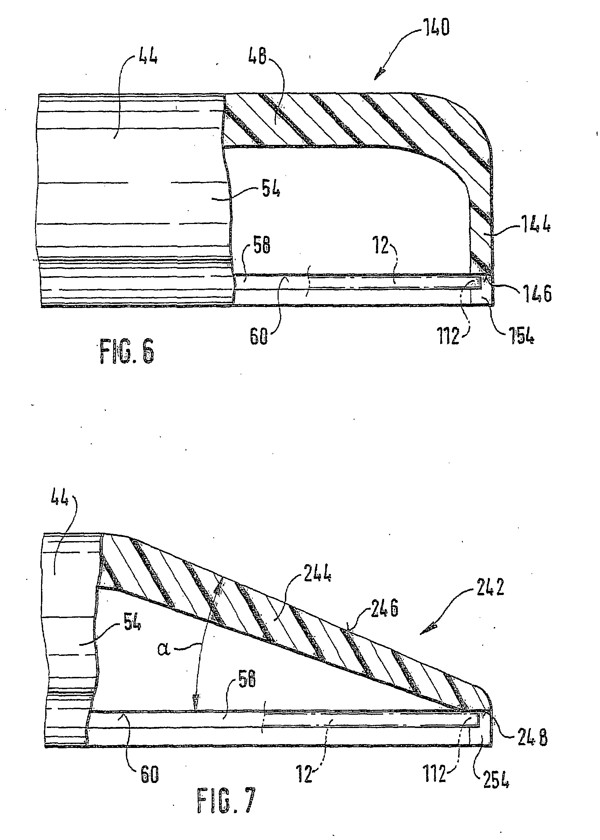

In der Zeichnung zeigen: Figur 1 ein erfindungsgemäßes Wischblatt in perspektivischer Darstellung mit strichpunktiert angedeutetem Wischerarm, Figur 2 einen Querschnitt durch das Wischblatt entlang der Linie II-II in Figur 1 in vergrößerter Darstellung, Figur 3 den Querschnitt gemäß Figur 2 durch die zum Wischblatt gehörende Windabweisleiste ohne Wischleiste und Tragelement, Figur 4 eine Teildarstellung gemäß Figur 1 eines anders ausgebildeten Wischblatts gemäß der Erfindung, Figur 5 eine Ansicht des Wischblatts gemäß Figur 4 in Richtung des Pfeiles V gesehen vergrößert dargestellt, Figur 6 einen vergrößerten Teilschnitt entlang der Linie VI-VI durch das eine Ende der zum Wischblatt gemäß Figur 4 gehörenden Windabweisleiste, dessen Lage in Figur 5 durch eine Linie VI-VI präzisiert ist und Figur 7 einen Schnitt gemäß Figur 6 durch eine weitere Ausführung einer zum erfindungsgemäßen Wischblatt gehörenden Windabweisleiste.

### Beschreibung der Ausführungsbeispiele

Ein in Figur 1 gezeigtes Wischblatt 10 weist ein bandartig langgestrecktes, federelastisches Tragelement 12 auf (Figuren 1 und 2), an dessen unteren, der Scheibe zugewandten Bandseite 13 eine langgestreckte, gummielastische Wischleiste 14 längsachsenparallel befestigt ist. An der oberen, von der Scheibe abgewandten Bandseite 11 des auch als Federschiene zu bezeichnenden Tragelements 12 ist in dessen Mittelabschnitt das wischblattseitige Teil 15 einer Anschlußvorrichtung angeordnet, mit deren Hilfe das Wischblatt 10 gelenkig mit einem in Figur 1 strichpunktiert angedeuteten Wischerarm 16 lösbar verbunden.werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden.

Aus Figur 2 ist ersichtlich, dass das Tragelement 12 beim Ausführungsbeispiel zwei Federschienen 30 hat, die in einer gemeinsamen, zur Scheibenoberfläche 22 etwa parallelen Ebene angeordnet sind. Die beiden Federschienen 30 tauchen mit ihren inneren, einander zugewandten Randstreifen 32 in randoffene Längsnuten 34 der Wischleiste 14 ein und ragen mit äußeren Randstreifen 36 aus diesen Längsnuten 34 heraus. Die beiden Federschienen 30 werden durch das Teil 15 der Anschlußvorrichtung im Mittelbereich des Wischblatts und durch an jedem Ende des Wischblatts angeordnete Endkappen 38 in ihren Längsnuten 34 gesichert. Dazu umgreifen diese Bauelemente 15 und 38 die äußeren Randstreifen 36 der Federschienen 30. Zwischen dem Teil 15 und jeder der beiden Endkappen 38 sind Teilstücke 40 einer Windabweisleiste 42 angeordnet. Die Anordnung der Windabweisleiste 42 und deren Ausgestaltung ist aus den Figuren 2 und 3 zu entnehmen. Die aus einem elastischen Material, beispielsweise aus einem Kunststoff bestehende Windabweisleiste 42 beziehungsweise deren beide Teilstücke 40 sitzen an der oberen Bandseite 11 des Tragelements 12. Im Querschnitt gesehen hat die Windabweisleiste 42 zwei divergierende Schenkel 44 und 46, die an einer gemeinsamen Basis 48 miteinander verbunden sind. Die freien Enden 50 und 52 der Schenkel 44 und 46 sind der Scheibe 22 zugewandt und stützen sich am Wischblatt 10 beziehungsweise an dessen Tragelement 12 ab. An dem einen Schenkel 44 ist an dessen Außenseite eine beim Ausführungsbeispiel gekehlte Anströmfläche 54 ausgebildet, die während des Betriebs der Wischvorrichtung hauptsächlich vom Fahrtwind angeströmt wird. Die aus den Figuren 2 und 4 ersichtliche Querschnittsform der Windabweisleiste 42 beziehungsweise von deren Teilstücken 40 ist über die gesamte Länge gleich, so dass diese Teilstücke kostengünstig extrudiert werden können. Die Teilstücke 40 der Windabweisleiste 42 sind mit ihren freien Schenkelenden 50 und 52 fest mit dem Wischblatt beziehungsweise mit dessen Tragelement 12 fest verbunden. Zweckmäßig sind dazu die freien Schenkelenden der Windabweisleiste 42 mit dem Tragelement 12 des Wischblatts 10 verklebt. Dazu sind die freien Enden 50 und 52 der Schenkel 44 und 46 mit krallenartigen Fortsätzen 56, 58 versehen, welche die äußeren, von einander abgewandten Randstreifen 36 des Tragelements 12 passend umgreifen. Die an den Randstreifen 36 anliegenden Flächen der krallenartigen Fortsätze 56, 58 dienen als Klebeflächen, mit welchen die Teilstücke 40 der Windabweisleiste 42 mit dem Tragelement verklebt sind. Für eine besonders stabile Klebeverbindung haben die an der oberen Bandseite 11 des Tragelements 12 anliegenden Krallenflächen 60 (Figur 3) eine größere Breite 62 als die an der unteren Bandseite 13 angreifende Krallenfläche 64, deren Breite in Figur 3 mit der Bezugszahl 66 versehen ist. Aus Figur 1 ist zu entnehmen, dass sich die gekehlte Anströmfläche 54 der Teilstücke 40 sowohl an den Endkappen 38 als auch am Teil 15 der Anschlußvorrichtung fortsetzt. Die Kehlung der Endkappen 38 hat in Figur 1 die Bezugszahl 68, während die Kehlung des Bauteils 15 mit der Bezugszahl 70 versehen ist. Die Windabweisleiste 42 bzw. deren Teilstücke 40 haben über ihre gesamte Länge einen gleichbleibenden Querschnitt, so dass sie kostengünstig extradiert werden können.

In den Figuren 4 bis 6 ist eine andere Ausführungsform des erfindungsgemäßen Wischblatts 110 dargestellt. Da sich die Abweichungen vom Wischblatt 10 lediglich die Windabweisleiste betreffen, ist in Figur 4 lediglich ein Teilstück des Wischblatts 110 dargestellt, das von einem Ende aus bis zum nicht mehr dargestellten Teil 15 der Anschlußvorrichtung reicht. Der Aufbau der zum Wischblatt 110 gehörenden Windabweisleiste 142 entspricht hinsichtlich deren Verbindung mit dem Tragelement 12 an den äußeren Randstreifen 36 der Tragelement-Federschienen 30 dem oben beschriebenen Ausführungsbeispiel, so dass auf die diesbezüglichen Einzelheiten nicht mehr näher eingegangen zu werden braucht. Deshalb werden im folgendem auch für die schon erläuterten Ausgestaltungen der Windabweisleiste 142 dieselben Bezugszahlen verwendet wie sie bei der schon beschriebenen Ausführungsform angegeben worden sind. So hat die Windabweisleiste 142 im Querschnitt gesehen ebenfalls zwei Schenkel 44, 46, die an einer gemeinsamen Basis 48 miteinander verbunden sind. An den freien Enden 50 und 52 der Schenkel 44 und 46 sind ebenfalls krallenartige Fortsätze 56 und 58 vorgesehen, welche die äußeren Randstreifen 36 der Federschienen 30 passend umgreifen. Auch bei diesem Ausführungsbeispiel werden die beiden in einer Spitzform hergestellten Teilstücke 140 der Windabweisleiste 142 mit dem Tragelement 12 des Wischblatts 10 verklebt. Die krallenartigen Fortsätze ermöglichen ein einfaches Aufclipsen der Windabweisleiste auf das Trageelement und damit eine präzise Positionierung zum Klebevorgang. Auch decken sich die Klebestellen zuverlässig ab. Weiter ist am Schenkel 44 der Windabweisleiste 142 beziehungsweise an dessen Teilstücken 140 ebenfalls eine gekehlte Anströmfläche 54 ausgebildet (Fig. 5).

Abweichend von dem Ausführungsbeispiel gemäß den Figuren 1 bis 3 sind die beiden Schenkel 44 und 46 an den Wischblattenden beziehungsweise an den dort befindlichen Enden der Teilstücke 140 durch eine Wand 144 miteinander verbunden, welche sich von der Basis 48 aus bis zu den krallenartigen Fortsätzen 56, 58 erstreckt. Die Wand 144 ist dabei im wesentlichen senkrecht zum Tragelement 12 beziehungsweise zu den dieses umgreifenden krallenartigen Fortsätzen 56, 58 ausgerichtet.

Wie die Figuren 5 und 6 zeigen ist die Wand 144 mit einer zur Scheibe hin randoffenen Aussparung 146 versehen, deren Breite 148 größer ist als die Breite 150 der in Figur 5 strichpunktiert angedeuteten Wischleiste 14. Die Tiefe 152 der Aussparung 146 reicht bis zur oberen Bandfläche 11 des Tragelements 12. Dies ist in Figur 5 anhand der oberen Krallenfläche 60 nachvollziehbar, welche bei mit dem Tragelement verklebter Windabweisleiste an der oberen Bandseite 11 des Tragelements 12 beziehungsweise an der Oberseite von deren Federschienen 30 anliegt. Weiter ist aus Figur 6 zu entnehmen, dass sich die krallenartige Fortsätze von den Enden der Schenkel 44, 46 aus in den Bereich der Wand 144 erstrecken und die stirnseitigen Endbereiche 112 des strichpunktiert angedeuteten Tragelements 12 passend umgreifen. In Figur 6 ist der krallenartige Fortsatz der Wand 144 des Teilstücks 140 mit der Bezugszahl 154 versehen worden. Die krallenartigen Fortsätze 56, 58 bei den Ausführungsbeispielen gemäß den Figuren 1 bis 3 und 4 bis 6 dienen sowohl der Abdeckung der scharfkantigen, freiliegenden Endkanten des Tragelements 12 als auch als zuverlässige Plazierungshilfe für die Teilstücke 40 beziehungsweise 140, wenn diese mit dem Tragelement 12 verklebt werden.

In Figur 7 ist eine alternative Anordnung der Wand 144 (Figur 6) gezeigt. Die im Endbereich der Windabweisleiste 242 angeordnete Wand 244 ist so angeordnet, dass ihre Außenseite 246 mit dem Tragelement 12 einen spitzen Winkel α einschließt. Dies ist anhand des krallenartigen Fortsatzes 58 nachvollziehbar, der bei mit dem Tragelement verbundene Windabweisleiste 242 dieses passend umschließt und der mit seiner Krallenfläche 60 an der oberen Bandseite 11 des Tragelements 12 anliegt. Auch bei dieser Ausführungsform ist die Wand 244 beziehungsweise deren krallenartiger Fortsatz 254 mit einer Aussparung 248 versehen, welche in ihrer Anordnung und Dimensionierung der Aussparung 146 gemäß der Ausführungsform nach den Figuren 4 bis 6 entspricht. Weiter ist aus Figur 7 ersichtlich, dass an der Wand 244 ebenfalls krallenartige Fortsätze 254 angeordnet sind, welche stirnseitige Endbereiche 112 des strichpunktiert angedeuteten Tragelements 12 passend umgreifen.

Damit die mit der Auslegung des Tragelements angestrebten Eigenschaften des Wischblatts nicht unzulässig hoch beeinflusst werden, liegt die Härte des Materials für die Windabweisleiste 42 höchstens 40 % über der Härte des Materials für die Wischleiste 14. Besonders vorteilhaft ist eine Beschränkung dieses Wertes auf 20 %. In der Praxis hat es sich gezeigt, dass die günstigsten Ergebnisse hinsichtlich der Wischqualität über einen breiten Fahrgeschwindigkeibsbereich dann erzielt werden, wenn die Wischleiste 14 eine Shore-Härte A von 68 und die Windabweisleiste 42 eine Shore-Härte A von 72 aufweisen.

Besonderen Wert ist in diesem Zusammenhang auch die Dicke der Schenkel 44 und 46 in Abstimmung mit der gewählten Härte der Materialien für die Windabweisleiste und die Wischleiste zu legen.

Allen Ausführungsbeispielen ist gemeinsam, dass die Windabweisleiste 42 beziehungsweise 142 beziehungsweise 242 im Querschnitt gesehen zwei divergierende Schenkel 44 und 46 hat, die an einer gemeinsamen Basis 48 miteinander verbunden sind, deren freie, der Scheibe 22 zugewandte Enden 50 und 52 sich am Wischblatt 10 abstützen wobei an der Außenseite des einen Schenkels 44 die Ausströmfläche 54 ausgebildet ist.

Abweichend von den beschriebenen Ausführungsbeispielen ist es aber auch denkbar, dass anstelle von zwei Teilstücken 40 der Windabweisleiste 42 diese sich einstückig über das Vorrichtungsteil 15 erstreckt und dieses abdeckt. Es versteht sich von selbst, dass in diesem Fall die Windabweisleiste zumindest eine entsprechende Aussparung haben muss, welche die gelenkige Verbindung zwischen Wischerarm und Wischblatt ermöglicht.

Weiter ist es denkbar, dass aufgrund bestimmter Kriterien es durchaus sinnvoll sein kann, wenn das Wischblatt gemäß Figur 1 bzw. gemäß Fig. 4 lediglich mit einem Teilstück 40 bzw. 140 der Windabweisleiste versehen wird, das entweder am pendelachsennahen Bereich oder am pendelachsenfernen Bereich des Wischblatts an diesem befestigt ist.

## Patentansprüche

1. Wischblatt zum Reinigen von Scheiben insbesondere von Kraftfahrzeugen mit einem bandartig langgestreckten, federelastischen Tragelement (12), an dessen der Scheibe (22) zugewandten unteren Bandfläche (13) eine an der Scheibe anlegbare, langgestreckte, gummielastische Wischleiste (14) längsachsenparallel angeordnet ist und an deren oberen Bandfläche (11) sich eine in Längsrichtung des Tragelements (12) erstreckende, mit einer der Fahrtwind-Hauptströmung zugewandten Anströmfläche (54) versehene, aus einem elastischen Material bestehende Windabweisleiste (42) befindet, **dadurch gekennzeichnet, dass** die Windabweisleiste (42, 142, 242) im Querschnitt gesehen zwei divergierende Schenkel (44, 46) hat, die an einer gemeinsamen Basis (48) miteinander verbunden sind, deren freie, der Scheibe (22) zugewandte Enden sich am Wischblatt (10) abstützen und an der Außenseite des einen Schenkels (44) die Anströmfläche (54) ausgebildet ist.

2. Wischblatt nach Anspruch 1, **dadurch gekennzeichnet, dass** die obere Bandfläche (11) des Tragelements (12) in dessen Mittelabschnitt das wischblattseitige Teil (15) einer Vorrichtung zum Verbinden des Wischblatts (10) mit einem pendelnd angetriebenen Wischerarm (16) sitzt, dass an jedem der beiden Enden des Tragelements (12) eine Endkappe (38) angeordnet ist und dass sich zwischen den Endkappen (38) und dem Vorrichtungsteil (15) jeweils ein Teilstück (40) der Windabweisleiste (42) erstreckt.

3. Wischblatt nach einem der Ansprüche 1 oder 2, **dadurch gekennzeichnet, dass** das Profil des Querschnitts über die gesamte Länge der Windabweisleiste (42) gleich ist.

4. Wischblatt nach Anspruch 1, **dadurch gekennzeichnet, dass** die beiden Schenkel (44, 46) der Windabweisleiste (142 beziehungsweise 242) im Bereich der beiden Wischblattenden durch eine Wand (144 beziehungsweise 244) miteinander verbunden sind.

5. Wischblatt nach Anspruch 4, **dadurch gekennzeichnet, dass** die Wand (144) im wesentlichen senkrecht zum Tragelement (12) ausgerichtet ist.

6. Wischblatt nach Anspruch 4, **dadurch gekennzeichnet, dass** die Außenseite (246) der Wand (244) mit dem Tragelement (12) einen spitzen Winkel (α) einschließt.

7. Wischblatt nach einem der Ansprüche 4 bis 6, **dadurch gekennzeichnet, dass** die Wand (144 beziehungsweise 244) mit einer zur Scheibe (22) hin randoffenen Aussparung (146 beziehungsweise 246) versehen ist, deren Breit (148) größer ist als die Breite (150) der Wischleiste (14) im Bereich des Tragelements und deren Tiefe (152) bis zur oberen Bandfläche (11) des Tragelements (12) reicht.

8. Wischblatt nach einem der Ansprüche 1 bis 7, **dadurch gekennzeichnet, dass** die freien Schenkelenden (50, 52) der Windabweisleiste (42 beziehungsweise 142 beziehungsweise 242) mit dem Wischblatt (10) fest verbunden sind.

9. Wischblatt nach einem der Ansprüche 1 bis 8, **dadurch gekennzeichnet, dass** die freien Schenkelenden (50, 52) der Windabweisleiste (42 beziehungsweise 142 beziehungsweise 242) mit dem Wischblatt (10) verklebt sind.

10. Wischblatt nach einem der Ansprüche 1 bis 9, **dadurch gekennzeichnet, dass** die freien Schenkelenden (50, 52) der Windabweisleiste (42 beziehungsweise 142 beziehungsweise 242) mit dem Tragelement (12) des Wischblatts (10) verbunden, vorzugsweise verklebt sind.

11. Wischblatt nach, **dadurch gekennzeichnet, dass** die freien Schenkelenden (50, 52) der Windabweisleiste (42 beziehungsweise 142 beziehungsweise 242) wenigstens abschnittsweise mit krallenartigen Fortsätzen (56, 58) versehen sind, welche die äußeren, voneinander abgewandten Randstreifen (36) des Tragelements (12) passend umgreifen.

12. Wischblatt nach Anspruch 11 und 4, **dadurch gekennzeichnet, dass** sich.die krallenartigen Fortsätze von den Schenkelenden (50, 52) aus in den Bereich der Wand (154 beziehungsweise 254) erstrecken und stirnseitige Endbereiche (112) des Tragelements (12) passend umgreifen.

13. Wischblatt nach einem der Ansprüche 11 oder 12, **dadurch gekennzeichnet, dass** die Klebeverbindung im Bereich der krallenartigen Fortsätze (56, 58) erfolgt.

14. Wischblatt nach einem der Ansprüche 11 bis 13, **dadurch gekennzeichnet, dass** die an der oberen Bandfläche (11) des Tragelements (12) anliegende Krallenfläche (60) eine größere Breite (62) hat als die an der unteren Bandseite (13) angreifende Krallenfläche (64).

15. Wischblatt nach einem der Ansprüche 1 bis 14, **dadurch gekennzeichnet, dass** die Anströmfläche (54) der Windabweisleiste (42 beziehungsweise 142 beziehungsweise 242) an der Außenwand des einen Schenkels (44) als Hohlkehle ausgebildet ist.

16. Wischblatt nach einem der Ansprüche 2, 3 und 8 bis 15, **dadurch gekennzeichnet, dass** die Endkappen (38) mit einer Hohlkehle (68) versehen sind, die sich in Verlängerung der Kehlung der Anströmfläche (54) der Windabweisleiste erstreckt.

17. Wischblatt nach einem der Ansprüche 2 bis 16, **dadurch gekennzeichnet, dass** das wischblattseitige Teil (15) der Verbindungsvorrichtung mit einer Hohlkehle (70) versehen ist, die sich in Verlängerung der Kehlung der Anströmfläche (54) der Windabweisleiste (42) erstreckt.

18. Wischblatt nach einem der Ansprüche 1 bis 17, **dadurch gekennzeichnet, dass** die Härte des Materials für die Windabweisleiste (42) höchstens um 40 Prozent über der Härte des Materials für die Wischleiste (14) liegt.

19. Wischblatt nach einem der Ansprüche 1 bis 17, **dadurch gekennzeichnet, dass** die Härte des Materials für die Windabweisleiste (42 beziehungsweise 142 beziehungsweise 242) höchstens um 20 Prozent über der Härte des Materials für die Wischleiste (14) liegt.

20. Wischblatt nach einem der Ansprüche 1 bis 19, **dadurch gekennzeichnet, dass** die Wischleiste (14) eine Shore-Härte A zwischen 64 und 71 insbesondere von 68 und die Windabweisleiste (42) eine Shore-Härte A zwischen 70 und 78 insbesondere von 72 aufweisen.

## Claims

1. Wiper blade for cleaning screens in particular on motor vehicles, having a spring-elastic supporting element (12) which is elongate in the manner of a band and on the lower band surface (13) of which, which faces the screen (22), an elongate, rubber-elastic wiper strip (14) which can be placed against the screen is arranged parallel to the longitudinal axis, and on the upper band surface (11) of which there is a wind-deflecting strip (42) which extends in the longitudinal direction of the supporting element (12), is provided with an incident flow surface (54), which faces the main relative wind flow, and consists of an elastic material, **characterized in that** the wind-deflecting strip (42, 142, 242) has, as seen in cross section, two diverging limbs (44, 46) which are connected to each other on a common base (48) and the free ends of which, which face the screen (22), are supported on the wiper blade (10), and the incident flow surface (54) is formed on the outside of one limb (44).

2. Wiper blade according to Claim 1, **characterized in that** the wiper-blade-side part (15) of a device for connecting the wiper blade (10) to a wiper arm (16) driven in an oscillating manner sits on the upper band surface (11) of the supporting element (12), in the central section thereof, **in that** an end cap (38) is arranged on each of the two ends of the supporting element (12), and **in that** a respective subsection (40) of the wind-deflecting strip (42) extends between the end caps (38) and the device part (15).

3. Wiper blade according to either of Claims 1 and 2, **characterized in that** the profile of the cross section is identical over the entire length of the wind-deflecting strip (42).

4. Wiper blade according to Claim 1, **characterized in that** the two limbs (44, 46) of the wind-deflecting strip (142 or 242) are connected to each other in the region of the two ends of the wiper blade by means of a wall (144 or 244).

5. Wiper blade according to Claim 4, **characterized in that** the wall (144) is oriented essentially perpendicularly to the supporting element (12).

6. Wiper blade according to Claim 4, **characterized in that** the outside (246) of the wall (244) encloses an acute angle (α) with the supporting element (12).

7. Wiper blade according to one of Claims 4 to 6, **characterized in that** the wall (144 or 244) is provided with a cutout (146 or 246) which is open at the edge towards the screen (22) and the width (148) of which is larger than the width (150) of the wiper strip (14) in the region of the supporting element and the depth (152) of which reaches as far as the upper band surface (11) of the supporting element (12).

8. Wiper blade according to one of Claims 1 to 7, **characterized in that** the free limb ends (50, 52) of the wind-deflecting strip (42 or 142 or 242) are connected fixedly to the wiper blade (10).

9. Wiper blade according to one of Claims 1 to 8, **characterized in that** the free limb ends (50, 52) of the wind-deflecting strip (42 or 142 or 242) are bonded to the wiper blade (10).

10. Wiper blade according to one of Claims 1 to 9, **characterized in that** the free limb ends (50, 52) of the wind-deflecting strip (42 or 142 or 242) are connected, preferably bonded, to the supporting element (12) of the wiper blade (10).

11. Wiper blade according to one of Claims 1 to 10, **characterized in that** the free limb ends (50, 52) of the wind-deflecting strip (42 or 142 or 242) are provided at least in some sections with claw-like extensions (56, 58) which engage in a fitting manner around the outer edge strips (36) of the supporting element (12), which edge strips face away from one another.

12. Wiper blade according to Claim 11 and 4, **characterized in that** the claw-like extensions extend from the limb ends (50, 52) into the region of the wall (154 or 254) and engage in a fitting manner around end-side end regions (112) of the supporting element (12).

13. Wiper blade according to either of Claims 11 and 12, **characterized in that** the bonding connection takes place in the region of the claw-like extensions (56, 58).

14. Wiper blade according to one of Claims 11 to 13, **characterized in that** the claw surface (60) bearing against the upper band surface (11) of the supporting element (12) has a greater width (62) than the claw surface (64) acting on the lower band side (13).

15. Wiper blade according to one of Claims 1 to 14, **characterized in that** the incident flow surface (54) of the wind-deflecting strip (42 or 142 or 242) is designed as a flute on the outer wall of one limb (44).

16. Wiper blade according to one of Claims 2, 3 and 8 to 15, **characterized in that** the end caps (38) are provided with a flute (68) which extends as an elongation of the fluting in the incident flow surface (54) of the wind-deflecting strip.

17. Wiper blade according to one of Claims 2 to 16, **characterized in that** the wiper-blade-side part (15) of the connecting device is provided with a flute (70) which extends as an elongation of the fluting in the incident flow surface (54) of the wind-deflecting strip (42).

18. Wiper blade according to one of Claims 1 to 17, **characterized in that** the hardness of the material for the wind-deflecting strip (42) is at most 40% above the hardness of the material for the wiper strip (14).

19. Wiper blade according to one of Claims 1 to 17, **characterized in that** the hardness of the material for the wind-deflecting strip (42 or 142 or 242) is at most 20% above the hardness of the material for the wiper strip (14).

20. Wiper blade according to one of Claims 1 to 19, **characterized in that** the wiper strip (14) has a Shore hardness A of between 64 and 71, in particular of 68, and the wind-deflecting strip (42) has a Shore hardness A of between 70 and 78, in particular of 72.

## Revendications

1. Raclette d'essuie-glace pour le nettoyage de vitres, notamment dans des véhicules automobiles, comprenant un élément de support (12) élastique à ressort en forme de bande longitudinale sur lequel, au niveau de la surface inférieure (13) de sa bande tournée vers la vitre (22), est disposée parallèlement à l'axe longitudinal une lame d'essuyage (14) élastique longitudinale en caoutchouc pouvant être appliquée sur la vitre et, au niveau de la surface supérieure (11) de sa bande, se trouve une baguette de déflecteur de vent (42) en matériau élastique qui s'étend dans la direction longitudinale de l'élément de support (12) et est munie d'une surface frontale (54) tournée vers l'écoulement principal du vent pendant le déplacement,
**caractérisée en ce que**
la baguette de déflecteur de vent (42, 142, 242) observée en coupe transversale a deux branches divergentes (44, 46) qui sont reliées entre elles au niveau d'une base commune (48) et dont les extrémités libres tournées vers la vitre (22) s'appuient sur la raclette d'essuie-glace (10) et la surface frontale (54) est formée au niveau de la face extérieure de l'une des branches (44).

2. Raclette d'essuie-glace selon la revendication 1,
**caractérisée en ce que**
la surface supérieure (11) de la bande de l'élément de support (12) loge, dans sa partie centrale, l'élément (15) situé du côté de la raclette d'essuie-glace d'un dispositif servant à relier la raclette d'essuie-glace (10) à un bras d'essuie-glace (16) entraîné par un mouvement pendulaire,
un bouchon d'extrémité (38) est disposé sur chacune des deux extrémités de l'élément de support (12),
une pièce partielle (40) de la baguette de déflecteur de vent (42) s'étend à chaque fois entre les bouchons d'extrémité (38) et l'élément du dispositif (15).

3. Raclette d'essuie-glace selon l'une des revendications 1 ou 2,
**caractérisée en ce que**
le profil en coupe transversale est identique sur toute la longueur de la baguette de déflecteur de vent (42).

4. Raclette d'essuie-glace selon la revendication 1,
**caractérisée en ce que**
les deux branches (44, 46) de la baguette de déflecteur de vent (142, respectivement 242) sont reliées entre elles par une paroi (144, respectivement 244) au niveau des deux extrémités de la raclette d'essuie-glace.

5. Raclette d'essuie-glace selon la revendication 4,
**caractérisée en ce que**
la paroi (144) s'étend essentiellement perpendiculairement à l'élément de support (12).

6. Raclette d'essuie-glace selon la revendication 4
**caractérisée en ce que**
la face extérieure (246) de la paroi (244) forme un angle aigu (α) avec l'élément de support (12).

7. Raclette d'essuie-glace selon l'une des revendications 4 à 6,
**caractérisée en ce que**
la paroi (144, respectivement 244) est munie d'une découpe (146, respectivement 246) ouverte par rapport à la vitre (22) dont la largeur (148) est supérieure à la largeur (150) de la lame d'essuyage (14) au niveau de l'élément de support et dont la profondeur (152) s'étend jusqu'à la surface supérieure (11) de la bande de l'élément de support (12).

8. Raclette d'essuie-glace selon l'une des revendications 1 à 7,
**caractérisée en ce que**
les extrémités libres (50, 52) des branches de la baguette de déflecteur de vent (42, respectivement 142, respectivement 242) sont solidaires de la raclette d'essuie-glace (10).

9. Raclette d'essuie-glace selon l'une des revendications 1 à 8,
**caractérisée en ce que**
les extrémités libres (50, 52) des branches de la baguette de déflecteur de vent (42, respectivement 142, respectivement 242) sont collées à la raclette d'essuie-glace (10).

10. Raclette d'essuie-glace selon l'une des revendications 1 à 9,
**caractérisée en ce que**
les extrémités libres (50, 52) des branches de la baguette de déflecteur de vent (42, respectivement 142, respectivement 242) sont reliées à l'élément de support (12) de la raclette d'essuie-glace (10), et sont de préférence collées.

11. Raclette d'essuie-glace
**caractérisée en ce que**
les extrémités libres (50, 52) des branches de la baguette de déflecteur de vent (42, respectivement 142, respectivement 242) sont munies au moins partiellement de prolongements en forme de griffes (56, 58) qui entourent de manière adaptée les bandes latérales extérieures (36) de l'élément de support (12) qui sont en regard l'une de l'autre.

12. Raclette d'essuie-glace selon les revendications 11 et 4,
**caractérisée en ce que**
les prolongements en forme de griffes s'étendent, à partir des extrémités (50, 52) des branches, dans la région de la paroi (154, respectivement 254) et entourent de manière adaptée les zones d'extrémité (112) de l'élément de support (12) situées du côté frontal.

13. Raclette d'essuie-glace selon l'une des revendications 11 ou 12,
**caractérisée en ce que**
la liaison par collage est effectuée au niveau des prolongements en forme de griffes (56, 58).

14. Raclette d'essuie-glace selon l'une des revendications 11 à 13,
**caractérisée en ce que**
la surface de griffe (60) disposée sur la surface supérieure (11) de la bande de l'élément de support (12) a une largeur (62) supérieure à la surface de griffe (64) appliquée sur la face inférieure (13) de la bande.

15. Raclette d'essuie-glace selon l'une des revendications 1 à 14,
**caractérisée en ce que**
la surface frontale (54) de la baguette de déflecteur de vent (42, respectivement 142, respectivement 242) a la forme d'une cannelure sur la paroi extérieure de l'une des branches (44).

16. Raclette d'essuie-glace selon l'une des revendications 2, 3 et 8 à 15,
**caractérisée en ce que**
les bouchons d'extrémité (38) sont munis d'une cannelure (68) qui s'étend dans le prolongement du rainurage de la surface frontale (54) de la baguette de déflecteur de vent.

17. Raclette d'essuie-glace selon l'une des revendications 2 à 16,
**caractérisée en ce que**
l'élément (15) du dispositif de liaison situé du côté de la raclette d'essuie-glace est muni d'une cannelure (70) qui s'étend dans le prolongement du rainurage de la surface frontale (54) de la baguette de déflecteur de vent (42).

18. Raclette d'essuie-glace selon l'une des revendications 1 à 17,
**caractérisée en ce que**
la dureté du matériau de la baguette de déflecteur de vent (42) est au maximum de 40 % supérieure à la dureté du matériau de la lame d'essuyage (14).

19. Raclette d'essuie-glace selon l'une des revendications 1 à 17,
**caractérisée en ce que**
la dureté du matériau de la baguette de déflecteur de vent (42, respectivement 142, respectivement 242) est au maximum de 20 % supérieure à la dureté du matériau de la lame d'essuyage (14).

20. Raclette d'essuie-glace selon l'une des revendications 1 à 19,
**caractérisée en ce que**
la lame d'essuyage (14) présente une dureté Shore A comprise entre 64 et 71, et en particulier de 68, et la baguette de déflecteur de vent (42) présente une dureté Shore A comprise entre 70 et 78, et en particulier de 72.
